# EUROPÄISCHE PATENTSCHRIFT

(11) **EP 0 568 673 B1**
(45) Veröffentlichungstag und Bekanntmachung des Hinweises auf die Patenterteilung: **09.07.1997**
(21) Anmeldenummer: 92923747.7
(22) Anmeldetag: 19.11.1992
(51) Int. Cl.: A01F 12/44

(54) **REINIGUNGSVORRICHTUNG FÜR MÄHDRESCHER**
CLEANING DEVICE FOR HARVESTER-THRESHER
DISPOSITIF DE NETTOYAGE POUR MOISSONNEUSES-BATTEUSES

(30) Priorität: 23.11.1991 DE 4138530
(43) Veröffentlichungstag der Anmeldung: 10.11.1993
(73) Patentinhaber: SAME S.p.A., I-24047 Treviglio (Bergamo) (IT); LTG Lufttechnische GmbH, D-70405 Stuttgart (DE)
(72) Erfinder: VON ALLWÖRDEN, Wilhelm, D-7908 Oberstotzingen (DE); HÖNL, Josef, D-8882 Lauingen (DE); GANSEL, Rainer, D-7259 Ditzingen (DE); ROTH, Hans, Werner, D-7146 Tamm (DE); SCHIPS, Karl, D-7067 Urbach (DE); FICHTER, Rolf, D-7012 Fellbach (DE)
(74) Vertreter: Nau, Walter, Dipl.-Ing.
(86) Internationale Anmeldenummer: EP9202660
(87) Internationale Veröffentlichungsnummer: WO9309662

(56) Entgegenhaltungen:
- BE-A- 743 106
- CH-A- 495 690
- DE-A- 1 403 495
- DE-A- 2 853 700
- DE-B- 1 927 262
- GB-A- 477 873
- US-A- 1 584 790
- US-A- 2 682 951
- US-A- 3 043 427
- US-A- 3 664 349
- US-A- 4 906 219

## Beschreibung

Die Erfindung bezieht sich auf eine Reinigungsvorrichtung für Mähdrescher nach dem Oberbegriff des Anspruchs 1.

Der Aufbau von bekannten Reinigungsvorrichtungen für das Getreide in Mähdreschern sieht ein Gebläse vor, dem abluftseitig eine Windleiteinrichtung nachgeordnet ist, wodurch der Siebanordnung der vom Gebläse erzeugte Windstrom gezielt zugeführt werden kann.

Aus der DE-A-1,403,495 ist eine Reinigungsvorrichtung für Mähdrescher bekannt, die mit einem Querstromgebläse versehen ist, dem eine einen Außenmantel, einen Innenmantel sowie Seitenflächen aufweisende Windleiteinrichtung in Form eines Diffusors Zur Anströmung einer Siebanordnung nachgeordnet ist, wobei die Windleiteinrichtung Windführungsprofile in unterschiedlichen Einbaulagen in einem Bereich Zwischen dem Luftaustritt des Querstromgebläses und der Siebanordnung aufweist. Bei diesen bekannten Windführungsprofilen handelt es sich nicht um solche Windführungsprofile, durch die ein Eindringen von Körnern oder anderen unerwünschten Teilen in die Windleiteinrichtung verhindert wird, sondern diese dienen dazu, bei einem Radialgebläse mit unterteiltem Gebläserad im Luftaustrittsquerschnitt des Windkanales eine nahezu gleichmäßig verteilte Luftfüllung mit gleichmäßiger Geschwindigkeitsverteilung zu erreichen, so daß die Reinigungssiebe über ihre gesamte Breite gleich stark beaufschlagt werden.

Die Verwendung eines Querstromgebläses für die Reinigungsvorrichtung eines Mähdreschers geht aus der EP-OS 0 385 107 hervor. Das Querstromgebläse besteht aus einem trommelförmigen, breiten Laufrad radialer Bauform mit zahlreichen vorwärtsgekrümmten Schaufeln auf dem Gehäusemantel. Die Zuströmung wie auch die Abströmung des Gebläses erfolgt quer zur Achsrichtung des Gebläsekörpers. Das im Mähdrescher eingesetzte Querstromgebläse erstreckt sich über die gesamte Breite der Siebanordnung.

Diese Gebläsebauart besitzt nachteilig die Eigenschaft, daß in das Gehäuse des Querstromgebläses eintretende Verunreinigungen bzw. Körner auch nicht selbsttätig ausgetragen werden. Damit ergibt sich eine Funktionsbeeinflußung aufgrund von Strömungsverlusten mit der Folge, daß bei in Mähdreschern eingebauten Querstromgebläsen die Wirksamkeit der Reinigungsvorrichtung nachteilig beeinflußt werden kann.

Der Erfindung liegt die Aufgabe zugrunde, Maßnahmen im Abströmbereich eines im Mähdrescher eingesetzten Querstromgebläses vorzusehen, die einen gleichmäßigen Gebläsestrom unabhängig von der Lageposition des Querstromgebläses ermöglichen und weiter ein Eintreten von Fremdkörpern in das Querstromgebläse verhindern.

Diese Aufgabe ist durch die Kennzeichnenden Merkmale des Patentansprüches 1 gelöst. Die Windleiteinrichtung einer Mähdrescher-Reinigungsvorrichtung ist mit Windführungsprofilen versehen, die eine gezielte Abrißkante der Windströmung bewirken, um so ein Eindringen von Körnern oder anderen unerwünschten Teilen in die Windleiteinrichtung zu verhindern. Die erfindungsgemäßen Maßnahmen dienen zur Vergleichmäßigung des Abblaseprofils, bezogen auf den gesamten Querschnitt der Windleiteinrichtung, wodurch Differenzen der Strömungsgeschwindigkeit auf bis zu +/- 2 m/s verringert werden können. Die gleichmäßige Verteilung der Windströmung hat weiter vorteilhaft zur Folge, daß die nachgeordnete Siebeinrichtung eine gleichmäßige Anströmung erhält. Die erfindungsgemäße Vorrichtung, eingebaut in Mähdreschern mit einem Querstromgebläse, gewährleistet vorteilhaft einen Körneraustrag aus der Windleiteinrichtung, da Körner bevorzugt bei einer Talfahrt des Mähdreschers sowie bei einem Betrieb des Mähdreschers in einer Hanglage in die Windleiteinrichtung eintreten. Dazu lenken die erfindungsgemäßen Windführungsprofile den Windstrom gezielt in die Zonen, über die bevorzugt das Getreide von der Reinigungsvorrichtung in die Windleiteinrichtung gelangt.

Die Windführungsprofile sind keilförmig ausgebildet, wodurch die gewollte Abrißkante der Strömung vorteilhaft verstärkt werden kann, zur Darstellung einer turbulenten Strömung.

Weiterhin wird der Windstrom in der als Diffusor ausgelegten Windleiteinrichtung mittels eines Windführungsprofils aufgeteilt, um so gezielt das Unter- und das Obersieb der nachgeordneten Siebanordnung anzuströmen. Vorteilhaft ist dazu das Windführungsprofil - die beiden Seitenflächen des Diffusors verbindend - so angeordnet, daß der Diffusor in zwei gleiche Querschnittsflächen aufgeteilt wird. Das in der Mittenzone des Diffusors übereinstimmend mit dessen Einbaulage eingesetzte Windführungsprofil weist ein keilförmiges Querschnittsprofil auf, wobei die Keilform ausgehend vom Querstromgebläse bis zur halben Länge des Windführungsprofils reicht, dem sich danach ein Rechteckquerschnitt anschließt, d. h. die Außenflächen des Windführungsprofils verlaufen parallel zueinander. Aufgrund der schrägen Einbaulage, die übereinstimmt mit der des Diffusors, ist die Unterseite des erfindungsgemäßen Windführungsprofils kürzer als die Oberseite, um so einen gleichen Abstand zu der nachgeordneten Siebanordnung zu erreichen. Damit stellt sich vorteilhaft ein gleicher Abstand der Abrißkante zu dem nachgeordneten Bauteil ein, die gleiche Strömungsverhältnisse bewirken.

Ein weiterer Vorteil ist die Gestaltung des Innenmantels als Wirbelbilder, mit dem ebenfalls der vom Querstromgebläse erzeugte Windstrom auch in diesem Bereich gezielt beeinflußbar ist. Zur Strömungsbeeinflußung auf dem vom Innenmantel gegenüber liegenden Außenmantel des Diffusors weist dieser Bereich mehrere Windführungsprofile auf, die in Richtung des innerhalb des Diffusors eingesetzten den Windstrom teilenden Windführungsprofils gerichtet sind. Die Anordnung sieht dazu jeweils paarweise angeordnete, in der Höhe gestuft ausgelegte Windführungsprofile vor, die im Bereich der Seitenfläche des Diffusors angebracht sind. In einer Ausgestaltung der Erfindung sind die auf dem Deckel am Außenmantel des Diffusors befestigten Windführungsprofile ausgehend von der Windstromrichtung nach außen liegend schräg angeordnet, um so den Windstrom in beide Seitenbereiche des Diffusor-Querschnitts zu leiten, der im wesentlichen eine rechteckige Querschnitts-Form besitzt, deren Seitenbereiche ohne die erfindungsgemäßen Maßnahmen keine optimale Anströmung erfahren würden.

Erfindungsgemäß ist im Diffusor ein Deckel eingebracht, der auf dem Außenmantel in den Diffusorinnenraum zeigend befestigt ist. Der Deckel erstreckt sich über die gesamte Breite des Diffusors und dient als Träger verschiedener Windführungsprofile.

Durch Versuche konnte eine optimale Anordnung der Windführungsprofile auf dem Deckel bestimmt werden, bei dem diese unter einem Neigungswinkel von ca. 60° ausgehend von der Windstromrichtung nach außen, d. h. in Richtung der Seitenbereiche der Windleiteinrichtung geneigt angeordnet sind.

Auf dem Deckel ist weiter auf der zum Querstromgebläse zeigenden Längsseite ein weiteres Windführungsprofil befestigt, welches quer zur Windstromrichtung angeordnet ist, dessen Längserstreckung bis nahe an die paarweise schräg angeorndeten Windführungsprofile reicht.

Die im Diffusor an unterschiedlichen Stellen eingebrachten Windführungsprofile besitzen übereinstimmend ein Querschnittsprofil, das einem rechtwinkligen Dreieck entspricht, wobei die Anbringung jeweils so erfolgt, daß die Hypothenuse in Richtung der Windströmung steigend angeordnet ist. Damit ist ein gewünschter abrupter Strömungsabriß vorteilhaft erzielbar.

Als eine weitere Maßnahme zur Vermeidung, daß Getreidekörner oder Fremdkörper in das Gehäuse des Querstromgebläses gelangen, ist an den Seitenflächen des Diffusors in der Windstromrichtung gesehen den Endbereich des Deckels überdeckend gegenüberliegend und zueinander ausgerichtet jeweils ein weiteres Windführungsprofil bzw. Körner-Umlenkprofil befestigt. Mit diesem Profil wird vorteilhaft bei einem Hangeinsatz eines Mähdreschers, bei dem sich das Getreide auf dem Vorbereitungsboden bzw. der Siebanordnung örtlich in eine Randzone verlagert mit der Folge, daß örtlich ein starker Körnerstrom in die Windleiteinrichtung gelangt, der durch die weiteren Profile in Richtung der Mittenzone des Diffusors umgelenkt wird zur besseren Beaufschlagung durch den Windstrom. Durch diese erfindungsgemäßen seitlichen Profile ergibt sich vorteilhaft eine Verteilung des Getreidestroms über eine größere Fläche, so daß der Windstrom die Körner erfaßt und weiterleitet und ein Eindringen in das Gebläsegehäuse verhindert.

In Ausgestaltung der Erfindung ist weiter vorgesehen, daß sowohl die Einbaulage als auch der Querschnitt einzelner Windführungsprofile einzeln oder gemeinsam veränderlich auslegbar sind zur Optimierung der Windleiteinrichtung an die jeweiligen Bedürfnisse, wie beispielsweise Häufigkeit von einem Hangeinsatz des Mähdreschers oder angepaßt an die zu erntende Getreideart.

Ein Ausführungsbeispiel, das zur weiteren Erläuterung der Erfindung beiträgt, ist aus den Zeichnungen sowie der anschließenden Figurenbeschreibung entnehmbar.

Es zeigt:
- Fig.1:: in einer Seitenansicht die Reinigungsvorrichtung eines Mähdreschers von der das Querstromgebläse und die nachgeordnete Windleiteinrichtung dargestellt ist;
- Fig.2:: die Draufsicht der in Fig.1 dargestellten Reinigungsvorrichtung;
- Fig.3:: in einer vergrößerten Darstellung die Anordnung von einigen Windführungsprofilen in der Windleiteinrichtung;
- Fig.4:: in einer Detaildarstellung die schräg eingebrachten Windführungsprofile;
- Fig.5:: eine weitere Schnittdarstellung durch ein schräg angeordnetes Windführungsprofil.

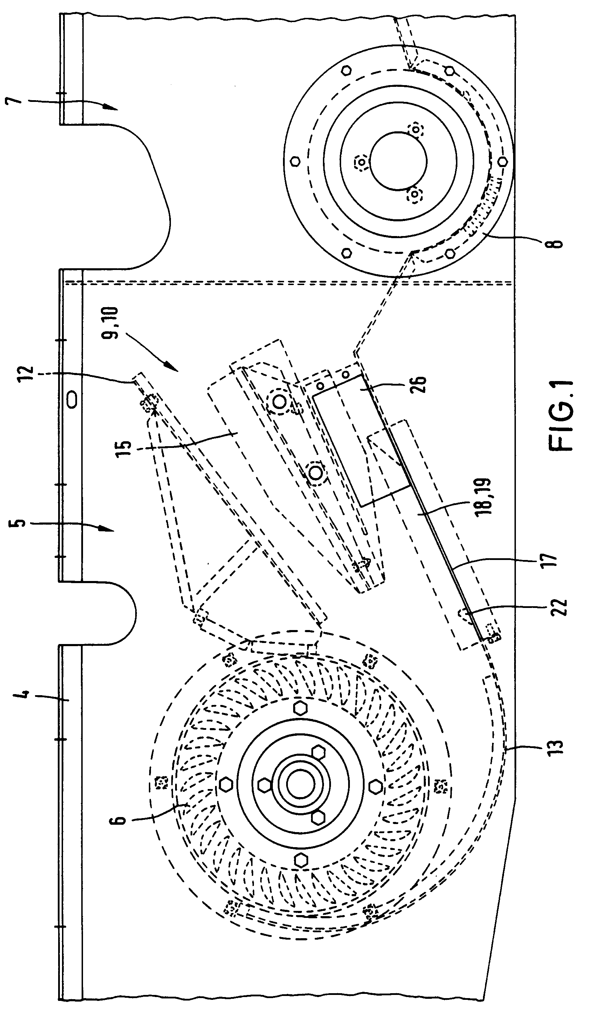

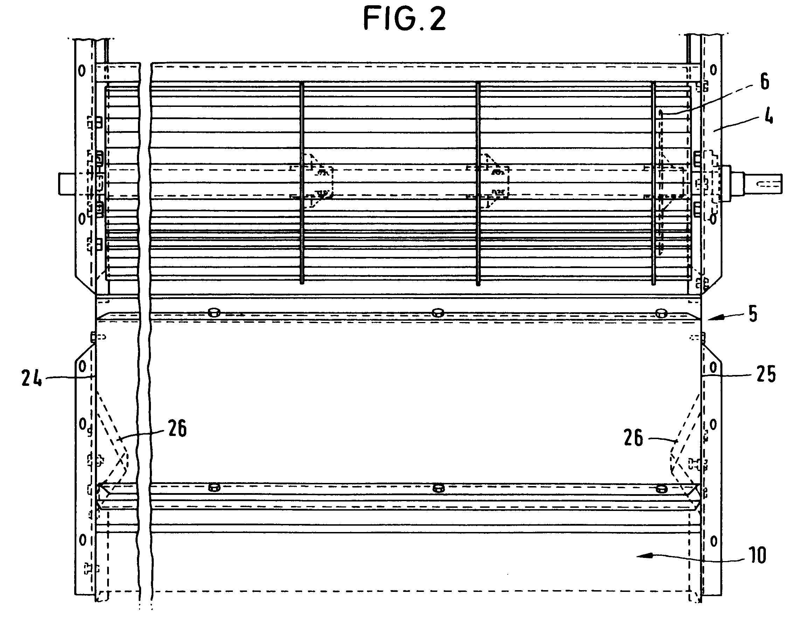

Aus der Fig.1 ist die erfindungsgemäße Windleiteinrichtung 9 entnehmbar, die Bestandteil einer Reinigungsvorrichtung 5 ist, zu der weiter das Querstromgebläse 6, die Siebanordnung 7 zählen von der in Fig.1 der Bauram dargestellt ist sowie die Förderschnecke 8. Die Reinigungsvorrichtung 5 ist eingebracht in einem Mähdrescher von der der Rahmen 4 in Fig.1 dargestellt ist. Der vom Querstromgebläse 6 erzeugte Windstrom beaufschlagt die Siebanordnung 7, wobei der Windstrom durch die zwischen den Bauteilen Querstromgebläse 6 und Siebanordnung 7 eingebrachte Windleiteinrichtung 9 - ausgebildet als Diffusor 10 - gezielt auf die Siebanordnung 7 gelenkt wird. Der Diffusor 10 besitzt einen ausgehend vom Querstromgebläse 6 sich aufweitenden, rechteckigen Querschnitt, von dessen Begrenzung in Fig.1 der Innenmantel 12 und der Außenmantel 13 dargestellt sind. Die weiteren Begrenzungen, die Seitenflächen 24, 25 sind der Fig.2 zu entnehmen. Der Windstrom dient dazu, insbesondere das Korn-Spreu-Gemisch, welches von dem oberhalb der Reinigungsvorrichtung im Mähdrescher angeordneten, in Fig.1 nicht dargestellten Vorbereitungsboden auf die Siebanordnung 7 gelangt und für eine gewisse Verteilung und Trennung der mit einem unterschiedlichen spezifischen Gewicht versehenen Bestandteile sorgt.

Der Mähdreschereinsatz in Hanglagen oder bei einer Talfahrt führt dazu, daß sich das Getreide-Spreu-Gemisch nicht über eine breite Zone auf die Siebanordnung verteilt sondern in einem oder mehreren dichten Volumenströmen, die vom Windstrom nicht optimal erfaßbar sind. Durch die erfindungsgemäßen Maßnahmen wird mit Hilfe von Windführungsprofilen der Luftstrom gezielt in die Zonen gelenkt, die einsatzbedingt nachteilig von größeren Getreide-Spreu-Volumenströmen beaufschlagt werden können. Der Außenmantel 13 besitzt dazu einen Deckel 17, auf dem ein quer zum Windstrom befestigtes Windführungsprofil 22 und jeweils paarweise an den Seitenbereichen schräg angeordnete Windführungsprofile 18, 19 befestigt sind. In Windstromrichtung, den Deckel 17 teilweise überdeckend und zur Hälfte die Einbaulage des Deckels 17 überragend ist übereinstimmend mit der Einbaulage des Außenmantels 13 an beiden Seitenflächen 24, 25 des Diffusors 10 ein weiteres Windführungsprofil 26 vorgesehen, das auch als Umlenkprofil für einen unerwünscht von der Siebanordnung 7 in die Windleiteinrichtung 9 eintretenden Getreidestrom von den Seitenflächen 24, 25 in die Mittenzone umlenkt, um so besser aus dem Diffusor 10 ausgetragen zu werden.

Die in der Draufsicht zu Fig.1 dargestellte Reinigungsvorrichtung 5 in Fig.2 verdeutlicht die Wirkungsweise der Windführungsprofile 26, mit denen der nachteilig in eine Randzone, d. h. eine der Seitenflächen 24, 25 gelangende Spreu-Getreide-Volumenstrom umlenkbar ist in den mittleren Bereich des Diffusors 10, um so effektiver durch den vom Querstromgebläse 6 erzeugten Windstrom erfaßt zu werden. Durch diese Abbildung wird weiter sichtbar, daß sich der Diffusor über die gesamte Breite des Querstromgebläses 6 erstreckt und die seitlichen Begrenzungen, die Seitenflächen 24, 25 des Diffusors 10 übereinstimmen mit dem Rahmen 4.

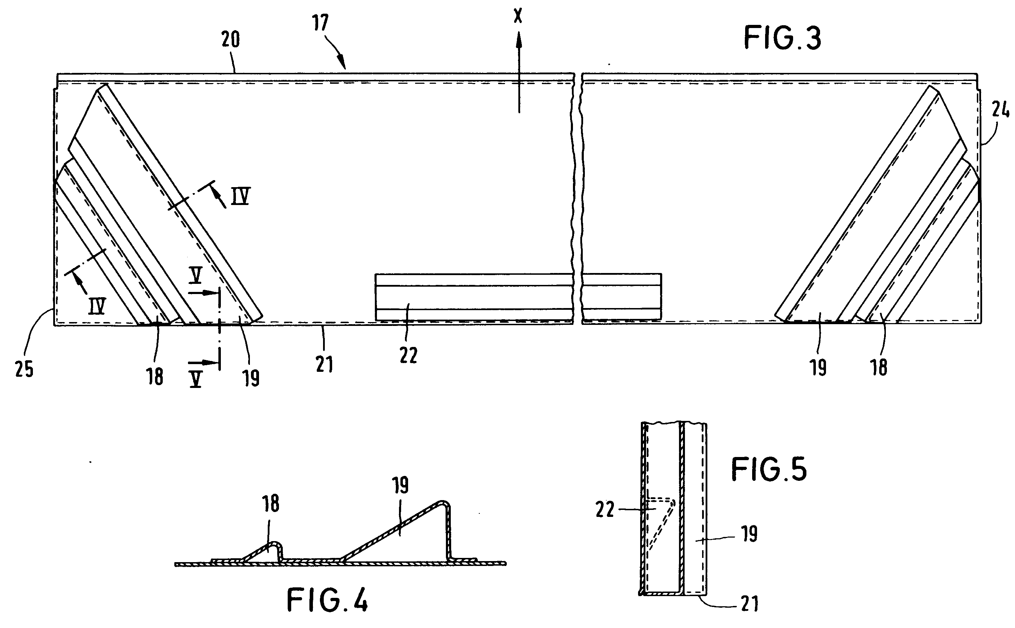

Aus der Fig.3 geht die vergrößerte Darstellung des Deckels 17 hervor, der mit mehreren voneinander abweichend gestalteten Windführungsprofilen 18, 19, 22 versehen ist. An beiden Außenseiten des Deckels 17 sind jeweils paarweise parallel zueinander angeordnete von der Windströmrichtung x abweichend in Richtung der Seitenflächen 24, 25 geneigte Windführungsprofile 18, 19 angebracht. Wie aus der Querschnittszeichnung in Fig.4 zu entnehmen ist, besitzen beide Windführungsprofile 18, 19 einen Aufbau vergleichbar einem rechtwinkeligem Dreieck, wobei deren Hypothenuse in Richtung der Längsseite 20 des Deckels 17 steigend angebracht sind. Das Windführungsprofil 19 verbindet schräg verlaufend beide Längsseiten 20, 21, dagegen das weiter nach außen gerichtete Windführungsprofil 18 die Längsseite 21 mit einer der Seitenflächen 24, 25. An der Längsseite 21 ist ein weiteres Windführungsprofil 22 in der Mittenzone des Deckels befestigt, dessen Längserstreckung bis nahe an die Windführungsprofile 19 reicht. Wie aus der Fig.5 entnehmbar, besitzt das Windführungsprofil 22 ebenfalls eine Querschnittsform, die einem rechtwinkligem Dreieck entspricht, deren Hypothenuse ausgehend von der Längsseite 21 steigend angeordnet ist. Die Gestaltung der Querschnittsprofile 18, 19, 22 wie auch die des mittig im Diffusor 10 angeordneten Windführungsprofils 15 bewirken durch ihre Gestaltung und Anordnung einen gewollten Strömungsabriß und damit eine vorteilhaft turbulente Strömung, um so eine optimale Windstrombeaufschlagung des Getreide-Spreu-Gemisches zu erreichen.

## Patentansprüche

1. Reinigungsvorrichtung (5) für Mähdrescher, versehen mit einem Querstromgebläse (6), dem eine einen Innenmantel (12), einen Außenmantel (13) sowie Seitenflächen (24, 25), aufweisende Windleiteinrichtung (9) in Form eines Diffusors zur Anströmung einer Siebanordnung (7) nachgeordnet ist, wobei die Windleiteinrichtung (9) Windführungsprofile (15, 18, 19, 22, 26) in unterschiedlichen Einbaulagen in einem Bereich zwischen dem Luftaustritt des Querstromgebläses (6) und der Siebanordnung (7) aufweist, dadurch gekennzeichnet, daß zumindest eines der Windführungsprofile (15) als Keilprofil zwischen dem als Wirbelbildner dienenden Innenmantel (12) des Diffusors und dem mit in Richtung der Seitenflächen (24, 25) geneigten Windführungsprofilen (18, 19) versehenen Außenmantel (13) des Diffusors angeordnet ist, so daß dadurch ein Eindringen von Körnern oder anderen unerwünschten Teilen in die Windleiteinrichtung (9), insbesondere bei einer Schrägfahrt des Mähdreschers, verhindert wird.

2. Reinigungsvorrichtung nach Anspruch 1, dadurch gekennzeichnet, daß in dem Diffusor (10) auf der zum Diffusorinnern gerichteten Seite des Außenmantels (13) ein Deckel (17) zur Aufnahme der Windführungsprofile (18, 19, 22) eingesetzt ist.

3. Reinigungsvorrichtung nach Anspruch 1 oder 2, dadurch gekennzeichnet, daß der Deckel (17) sich über die gesamte Breite des Diffusors (10) erstreckt.

4. Reinigungsvorrichtung nach Anspruch 2 oder 3, dadurch gekennzeichnet, daß beide Endbereiche des Deckels (17) mit zueinander übereinstimmend jeweils paarweise angeordneten und in der Höhe gestuft ausgelegten Windführungsprofilen (18, 19) versehen sind.

5. Reinigungsvorrichtung nach Anspruch 4, dadurch gekennzeichnet, daß die Anordnung der Windführungsprofile (18, 19) ausgehend von der Windstromrichtung x unter einem Neigungswinkel von ca. 60° nach außen in Richtung der Seitenflächen (24, 25) erfolgt.

6. Reinigungsvorrichtung nach einem der vorhergehenden Ansprüche, dadurch gekennzeichnet, daß ein an der zum Querstromgebläse (6) zeigenden Längsseite (21) des Deckels (17) das Windführungsprofil (22) quer zur Windstromrichtung x angeordnet ist.

7. Reinigungsvorrichtung nach einem der vorhergehenden Ansprüche, dadurch gekennzeichnet, daß die Windführungsprofile (15, 18, 19, 22, 26) so angeströmt werden, daß die Hypothenuse der im Querschnitt rechtwinklig ausgeführten Profile jeweils in Richtung der Windstromrichtung x steigend angeordnet ist.

8. Reinigungsvorrichtung nach einem der vorhergehenden Ansprüche, dadurch gekennzeichnet, daß an den Seitenflächen (24, 25) des Diffusors (10) in Windstromrichtung x gesehen, den Endbereich des Deckels (17) überdeckend, zueinander gegenüberliegend ausgerichtet je ein Windführungsprofil (26) befestigt ist.

9. Reinigungsvorrichtung nach Anspruch 8, dadurch gekennzeichnet, daß die Einbaulage des Windführungsprofils (26) übereinstimmt mit einem Körnerrücklauf in der Reinigungsvorrichtung (5).

10. Reinigungsvorrichtung nach einem der vorhergehenden Ansprüche, dadurch gekennzeichnet, daß die Windführungsprofile (15, 18, 19, 22, 26) in der Einbaulage und/oder im Querschnitt einzeln oder teilweise veränderlich ausgelegt sind.

## Claims

1. A cleaning device (5) for combine harvesters, provided with a cross-flow blower (6), downstream of which is a wind guiding device (9) in the form of a diffusor with an inner jacket (12), an outer jacket (13) and side surfaces (24, 25) to channel flow to a sieve arrangement (7), wherein the wind guiding device (9) is provided with wind guiding sections (15, 18, 19, 22, 26) fitted in different positions in a region between the air outlet of the cross-flow blower (6) and the sieve arrangement (7), characterised in that at least one of the wind guiding sections (15) is arranged as a wedge section between the inner jacket (12) of the diffusor serving to create turbulence and the outer jacket (13) of the diffusor provided with wind guiding sections (18, 19) inclined in the direction of the side surfaces (24, 25) so that any penetration of the grains or other unwanted particles into the wind guiding device (9) is prevented, especially when the combine harvester is traversing an inclined surface.

2. A cleaning device according to claim 1, characterised in that a cover (17) to accommodate the wind guiding sections (18, 19, 22) is inserted in the diffusor (10) on that side of the outer jacket (13) facing the interior of the diffusor.

3. A cleaning device according to claim 1 or claim 2, characterised in that the cover (17) extends across the entire width of the diffusor (10).

4. A cleaning device according to claim 2 or claim 3, characterised in that both end regions of the cover (17) are provided with wind guiding sections (18, 19) correspondingly arranged in pairs and staggered in height.

5. A cleaning device according to claim 4, characterised in that the arrangement of the wind guiding sections (18, 19) starting from the wind flow direction x is outwardly in the direction of the side surfaces (24, 25) at an angle of inclination of approximately 60°.

6. A cleaning device according to any one of the preceding claims, characterised in that a wind guiding section (22) is arranged transversely to the direction of wind flow x on the longitudinal side (21) of the cover (17) pointing to the cross-flow blower (6).

7. A cleaning device according to any one of the preceding claims, characterised in that the wind guiding sections (15, 18, 19, 22, 26) receive air flow in such a manner that the hypotenuse of the sections which are right-angled in cross-section in each case are arranged ascending in the direction of the wind flow x.

8. A cleaning device according to any one of the preceding claims, characterised in that a wind guiding section (26) is secured to each of the side faces (24, 25) of the diffusor (10) when viewed in the wind flow direction x, with the two sections (26) overlapping the end region of the cover (17) and lying facing one another.

9. A cleaning device according to claim 8, characterised in that the installation position of the wind guiding section (26) corresponds to a grain return to the cleaning device (5).

10. A cleaning device according to any one of the preceding claims, characterised in that the wind guiding sections (15, 18, 19, 22, 26) in the fitted position and/or in cross-section can be changed individually or in part.

## Revendications

1. Dispositif de nettoyage pour moissonneuses-batteuses comprenant un ventilateur à flux transversal (6) suivi d'une installation de guidage d'air (9) sous la forme d'un diffuseur pour attaquer un dispositif à tamis (7), ce dispositif comprenant une enveloppe intérieure (12), une enveloppe extérieure (13) et des surfaces latérales (24, 25), l'installation de guidage d'air (9) ayant des profilés de guidage d'air (15, 18, 19, 22, 26) dans les positions de montage différentes dans une zone comprise entre la sortie d'air du ventilateur à flux transversal (6) et le dispositif à tamis (7),
caractérisé en ce qu'
au moins l'un des profilés de guidage d'air (15) est un profilé en forme de coin entre l'enveloppe intérieure (12) du diffuseur servant de générateur de tourbillons et l'enveloppe extérieure (13) munie des profilés de guidage d'air (18, 19), inclinés en direction des surfaces latérales (24, 25), pour éviter ainsi la pénétration des grains et autres particules gênantes dans l'installation de guidage d'air (9) en particulier lorsque la moissonneuse-batteuse circule en position inclinée.

2. Dispositif de nettoyage selon la revendication 1,
caractérisé en ce qu'
un couvercle (17) recevant les profilés de guidage d'air (18, 19, 22) est prévu dans le diffuseur (10) sur le côté de l'enveloppe extérieure (13) tournée vers l'intérieur du diffuseur.

3. Dispositif de nettoyage selon la revendication 1 ou 2,
caractérisé en ce que
le couvercle (17) s'étend sur la largeur du diffuseur (10).

4. Dispositif de nettoyage selon la revendication 2 ou 3,
caractérisé en ce que
les deux zones d'extrémité du couvercle (17) sont munies par des profilés de guidage d'air (18, 19) correspondants, répartis par paire et dont les hauteurs sont étagées.

5. Dispositif de nettoyage selon la revendication 4,
caractérisé en ce que
le montage des profilés de guidage d'air (18, 19) se fait en partant de la direction d'écoulement d'air x avec un angle d'inclinaison d'environ 60° vers l'extérieur en direction des surfaces latérales (24, 25).

6. Dispositif de nettoyage selon l'une quelconque des revendications précédentes,
caractérisé en ce que
sur un grand côté (21) du couvercle (17), tourné vers la soufflante à flux transversal (6), se trouve le profilé de guidage d'air (22) transversal par rapport à la direction d'écoulement d'air x.

7. Dispositif de nettoyage selon l'une quelconque des revendications précédentes,
caractérisé en ce que
les profilés de guidage d'air (15, 18, 19, 22, 26) sont attaqués de façon que l'hypoténuse des profilés de section rectangulaire soit dirigée dans le sens montant selon la direction de l'écoulement de l'air x.

8. Dispositif de nettoyage selon l'une quelconque des revendications précédentes,
caractérisé en ce que
sur les surfaces latérales (24, 25) du diffuseur (10), dans la direction de l'écoulement d'air x, en chevauchant la zone d'extrémité du couvercle (17), il y a chaque fois un profilé de guidage d'air (26) dirigé de façon opposée.

9. Dispositif de nettoyage selon la revendication 8,
caractérisé en ce que
la position de montage du profilé de guidage d'air (26) correspond à un retour de grains dans le dispositif de nettoyage (5).

10. Dispositif de nettoyage selon l'une quelconque des revendications précédentes,
caractérisé en ce que
les profilés de guidage d'air (15, 18, 19, 22, 26) sont séparément ou partiellement modifiés pour la position de montage et/ou la section.
